(19) Europäisches Patentamt / European Patent Office / Office européen des brevets

(11) **EP 4 332 942 A1**

(12) **EUROPEAN PATENT APPLICATION**
published in accordance with Art. 153(4) EPC

(43) Date of publication:
06.03.2024 Bulletin 2024/10

(21) Application number: 22795255.3

(22) Date of filing: 24.02.2022

(51) International Patent Classification (IPC):
**G08G 3/02** (2006.01)   **B63B 79/40** (2020.01)

(52) Cooperative Patent Classification (CPC):
**B63B 79/40; G08G 3/02**

(86) International application number:
**PCT/JP2022/007554**

(87) International publication number:
**WO 2022/230332 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2021 JP 2021075837**

(71) Applicant: **Furuno Electric Co., Ltd.**
**Nishinomiya-City, Hyogo 662-8580 (JP)**

(72) Inventor: **UOSHITA, Seiichi**
**Nishinomiya-City, Hyogo 6628580 (JP)**

(74) Representative: **Müller Hoffmann & Partner**
**Patentanwälte mbB**
**St.-Martin-Strasse 58**
**81541 München (DE)**

(54) **SHIP MONITORING SYSTEM, SHIP MONITORING METHOD, INFORMATION PROCESSING DEVICE, AND PROGRAM**

(57) The present disclosure provides a ship monitoring system capable of easily grasping whether a ship passes through the front or the rear of another ship. The ship monitoring system includes a first estimator, a second estimator, and a passage determinator. The first estimator estimates an estimated position of a first ship after a first period of time in each direction, based on first ship data indicative of a position and a velocity of the first ship, by using a first formula, when assuming that the first ship travels after the first ship changed the course at the current position into an arbitrary direction. The second estimator estimates an estimated course of a second ship and an estimated position of the second ship after a second period of time, that is included in the estimated course of the second ship, based on second ship data indicative of a position and a velocity of the second ship, by using a second formula. The passage determinator determines that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

EXAMPLE OF INDICATION (CONVENTIONAL)

FIG. 3

EP 4 332 942 A1

**Description**

TECHNICAL FIELD

The present disclosure relates to a ship monitoring system, a ship monitoring method, an information processor, and a program.

BACKGROUND ART

Conventionally, various techniques for evaluating a risk of ships colliding to each other exist. For example, Nonpatent Document 1 discloses a technique for displaying an OZT (Obstacle Zone by Target).

[Reference Document(s) of Conventional Art]

[Patent Document]

[Nonpatent Document 1] IMAZU, Hayama, FUKUTO, Junji, and NUMANO, Masayoshi, "Obstacle Zone by Targets and Its Expression", The Journal of Japan Institute of Navigation, 2002, Vol. 107, pp. 191-197

DESCRIPTION OF THE DISCLOSURE

[Problem(s) to be Solved by the Disclosure]

Meanwhile, according to the technique for displaying the OZT, a ship can travel within a range of an estimated course of another ship where no OZT is displayed. However, as for such a range, it is difficult to grasp whether the ship passes through the front or the rear of another ship by just glancing at the range.

The present disclosure is made in view of the problem described above, and one main purpose thereof is to provide a ship monitoring system, a ship monitoring method, an information processor, and a program, which are capable of easily grasping whether the ship passes through the front or the rear of another ship.

[Summary of the Disclosure]

In order to solve the above-described problem, a ship monitoring system according to one aspect of the present disclosure includes a first estimator, a second estimator, and a passage determinator. The first estimator estimates an estimated position of a first ship after a first period of time in each direction, based on first ship data indicative of a position and a velocity of the first ship, by using a first formula, when assuming that the first ship travels after the first ship changed the course at the current position into an arbitrary direction. The second estimator estimates an estimated course of a second ship and an estimated position of the second ship after a second period of time, that is included in the estimated course of the second ship, based on second ship data indicative of a position and a velocity of the second ship, by using a second formula. The passage determinator determines that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

Further, a ship monitoring system according to another aspect of the present disclosure includes a first data generator, a second data generator, a first estimator, a second estimator, and a passage determinator. The first data generator generates first ship data indicative of a position and a velocity of a first ship. The second data generator generates second ship data indicative of a position and a velocity of a second ship. The first estimator creates a first formula indicative of an estimated position of the first ship after a first period of time in each direction, based on the first ship data, when assuming that the first ship travels after the first ship changed the course at the current position into an arbitrary direction. The second estimator creates a second formula indicative of an estimated position of the second ship after a second period of time, based on the second ship data. The passage determinator determines, based on a solution of simultaneous inequalities including the first formula and the second formula under a condition that the second period of time is larger than the first period of time or a condition that the second period of time is smaller than the first period of time, a range where the first ship passes through the front of the second ship and a range where the first ship passes through the rear of the second ship, among an estimated course of the second ship indicated by the second formula.

Further, a ship monitoring method according to another aspect of the present disclosure includes estimating an estimated position of a first ship after a first period of time in each direction, based on first ship data indicative of a position and a velocity of the first ship, by using a first formula, when assuming that the first ship travels after the first ship changed the course at the current position into an arbitrary direction, estimating an estimated course of a second ship and an estimated position of the second ship after a second period of time, that is included in the estimated course of the second ship, based on second ship data indicative of a position and a velocity of the second ship, by using a second formula, and determining that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

Further, an information processor according to another aspect of the present disclosure includes a first estimator, a second estimator, and a passage determinator. The first estimator estimates an estimated position of a first ship after a first period of time in each direction, based on first ship data indicative of a position and a velocity of the first ship, by using a first formula, when assuming that the first ship travels after the first ship changed the course at the current position into an arbitrary direction. The second estimator estimates an estimated course of a second ship and an estimated position of the second ship after a second period of time, that is included in the estimated course of the second ship, based on second ship data indicative of a position and a velocity of the second ship, by using a second formula. The passage determinator determines that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

Further, a program according to another aspect of the present disclosure causes a computer to execute processing which includes estimating an estimated position of a first ship after a first period of time in each direction, based on first ship data indicative of a position and a velocity of the first ship, by using a first formula, when assuming that the first ship travels after the first ship changed the course at the current position into an arbitrary direction, estimating an estimated course of a second ship and an estimated position of the second ship after a second period of time, that is included in the estimated course of the second ship, based on second ship data indicative of a position and a velocity of the second ship, by using a second formula, and determining that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

[Effect of the Disclosure]

According to the present disclosure, it becomes easier to grasp whether the ship passes through the front or the rear of another ship.

BRIEF DESCRIPTION OF DRAWINGS

Fig. 1 is a view illustrating one example of a configuration of a ship monitoring system according to one embodiment.
Fig. 2 is a view illustrating one example of other-ships management database.
Fig. 3 is a view illustrating one example of indication of an OZT (conventional example).
Fig. 4 is a view illustrating one example of a configuration of an information processor according to one embodiment.
Fig. 5 is a view illustrating a calculation.
Fig. 6 is a view illustrating a calculation.
Fig. 7 is a view illustrating one example of indication.
Fig. 8 is a view illustrating another example of the indication.

MODE FOR CARRYING OUT THE DISCLOSURE

Hereinafter, one embodiment of the present disclosure is described with reference to the drawings.

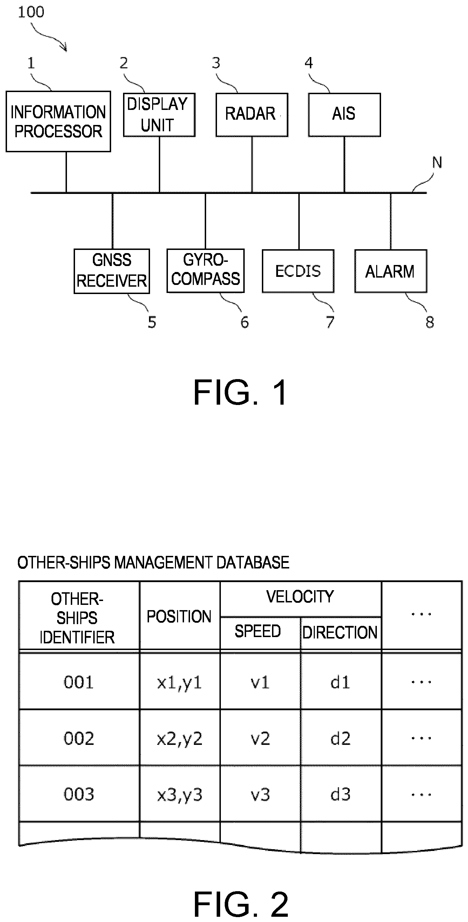

Fig. 1 is a block diagram illustrating one example of a configuration of a ship monitoring system 100 according to this embodiment. The ship monitoring system 100 may be a system which is mounted on a ship and monitors other ships which exist around the ship.

The ship on which the ship monitoring system 100 is mounted is one example of a first ship, and is referred to as "the ship" in the following description. Further, each of other ships which exist around the ship is one example of a second ship, and is referred to as "another ship" in the following description.

In the following description, a "velocity" is a vector quantity indicative of a speed and a direction (so-called "ship velocity vector"), and a "speed" is a scalar quantity.

The ship monitoring system 100 may include an information processor 1, a display unit 2, a radar 3, an AIS 4, a GNSS receiver 5, a gyrocompass 6, an ECDIS 7, and an alarm 8. These apparatuses may be connected to a network N (for example, a LAN), so that mutual network communications are possible.

The information processor 1 may be a computer including a CPU, a RAM, a ROM, a nonvolatile memory, and an input/output interface. The CPU of the information processor 1 may perform information processing according to a program loaded to the RAM from the ROM or the nonvolatile memory.

The program may be supplied via an information storage medium (for example, an optical disc or a memory card), or may be supplied via a communication network (for example, the Internet or the LAN).

The display unit 2 may be a display device with a touch sensor, for example. The touch sensor may detect a position in a screen which is instructed by a finger etc. The instructed position may be inputted by not only the touch sensor but also a trackball etc.

The radar 3 may transmit a radio wave around the ship, receive a reflection wave thereof, and generate echo data based on a reception signal. Further, the radar 3 may discriminate a target object from echo data, and generate Target-object Tracking data (TT data) indicative of a position and a velocity of the target object.

The AIS (Automatic Identification System) 4 may receive AIS data from other ship(s) and land controls which exist around the ship. A VDES (VHF Data Exchange System) may be used instead of the AIS. Each AIS data may include the position, the velocity, etc. of another ship.

The GNSS receiver 5 may detect the position of the ship based on radio waves received from a GNSS (Global Navigation Satellite System). The gyrocompass 6 may detect a direction (bearing or heading) of the ship. A GPS compass or a magnetic compass may be used instead of the gyrocompass.

The ECDIS (Electronic Chart Display and Information System) 7 may acquire the position of the ship from the GNSS receiver 5, and display the position of the ship on an electronic nautical chart. Further, the ECDIS 7 may also display a scheduled route of the ship on the electronic nautical chart. A GNSS plotter may be used instead of the ECDIS.

The alarm 8 may issue an alert, when there is a risk of the ship colliding with another ship. For example, the alarm 8 may issue an alert by indication, or may issue an alert by sound or light. The alert by indication may be performed by the display unit 2. That is, the display unit 2 may also serve as the alarm 8.

Although in this embodiment the information processor 1 is an independent device, without being limited to this configuration, it may be integrated with another device, such as the ECDIS 7 etc. That is, a functional part of the information processor 1 may be realized by another device, such as the ECDIS 7 etc.

Further, although the display unit 2 is also an independent device, without being limited to this configuration, a display unit of another device, such as the ECDIS 7 etc., may be used as the display unit 2 which displays an image generated by the information processor 1.

In this embodiment, a set of the GNSS receiver 5 and the ECDIS 7 is one example of a first data generator, which generates "the-ship data" indicative of the position and the velocity of the ship. In detail, the GNSS receiver 5 may detect the position of the ship, and the ECDIS 7 may detect the velocity of the ship based on a temporal change in the position of the ship.

Without being limited to this configuration, the velocity of the ship may be detected based on the direction of the ship detected by the gyrocompass 6, and a speed of the ship detected by a ship speed meter (not illustrated).

Further, the radar 3 or the AIS 4 is one example of a second data generator, which generates "other-ships data" indicative of a position and a velocity of another ship. In detail, the TT data generated by the radar 3 may correspond to "other-ships data." Further, the AIS data generated by the AIS 4 may also correspond to "other-ships data."

Fig. 2 is a view illustrating one example of other-ships management database which is established in the memory of the information processor 1. The other-ships data generated by the radar 3 or the AIS 4 may be registered in the other-ships management database.

The other-ships management database may include fields, such as an "other-ships identifier," a "position," a "speed," and a "direction." Note that the position and the direction of another ship which are detected by the radar 3 may be converted into a coordinate system which is the same as the GNSS.

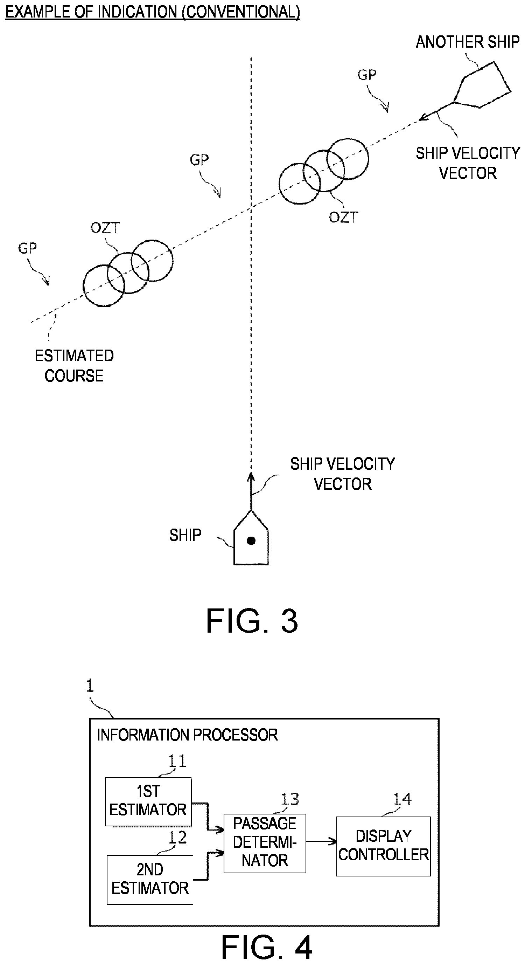

Fig. 3 is a view illustrating one example of indication of an OZT (conventional example). The OZT may be a zone where traveling of the ship is disturbed by another ship, and may be displayed on an estimated course of another ship.

Meanwhile, although a range GP on the estimated course of another ship where no OZT is displayed is a range where the ship can travel, it is difficult to grasp whether the ship passes through the front or the rear of another ship, by just glancing at such a range.

Therefore, in this embodiment, it may be determined whether the ship passes through the front or the rear of another ship, and the determination result may be then displayed, as will be described below.

Fig. 4 is a block diagram illustrating one example of a configuration of the information processor 1 according to this embodiment. The information processor 1 may include a first estimator 11, a second estimator 12, a passage determinator 13, and a display controller 14. These functional parts may be realized by the CPU of the information processor 1 executing information processing according to a program.

One example of a procedure of a ship monitoring method according to one embodiment may be realized by the first estimator 11, the second estimator 12, the passage determinator 13, and the display controller 14.

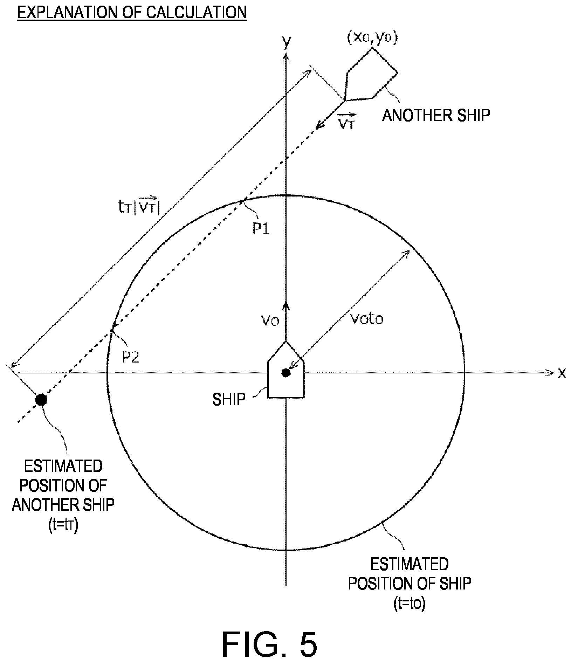

Fig. 5 is a view illustrating a calculation by the first estimator 11, the second estimator 12, and the passage determinator 13.

The first estimator 11 may estimate an estimated position of the ship after a first period of time to (t=to) in each direction based on the-ship data by using a first equation (hereinafter, referred to as a "first formula"), when assuming that the ship travels after it changed the course at the current position into an arbitrary direction. In detail, the first estimator 11 may create the first formula indicative of the estimated position of the ship after the first period of time to (t=to) as follows. The estimated position of the ship may be expressed by coordinates (x, y) in an xy plane. An initial position of the ship at t=0 may be the origin of the xy plane. If assumed that the ship can instantly turn to any direction, while maintaining a speed vo, the estimated position of the ship can be expressed by a formula of a circle with a radius voto centering on the origin, like the following first formula.

$$x^2 + y^2 = (v_0 t_0)^2 \quad \ldots \text{(First formula)}$$

The second estimator 12 may estimate an estimated course of another ship and an estimated position of another ship after a second period of time $t_T$ (t=$t_T$), which is included in the estimated course, based on the other-ships data by using a second equation (hereinafter, referred to as a "second formula"). In detail, the second estimator 12 may create the second formula indicative of the estimated position of another ship after the second period of time $t_T$ (t=$t_T$) as follows. The estimated position of another ship may be expressed by coordinates (x, y) in the xy plane. An initial position of another ship at t=0 may be ($x_0$, $y_0$). If assuming that another ship travels straight while maintaining the velocity, the estimated position of another ship may be expressed by a linear function like the following second formula. $v_{Tx}$ may be an x-component of the velocity of another ship. $v_{Ty}$ may be a y-component of the velocity of another ship.

$$x = x_0 + v_{Tx} t_T$$

$$y = y_0 + v_{Ty} t_T \quad \ldots \text{(Second formula)}$$

The passage determinator 13 may determine an "another ship front passage range" where the ship passes through the front of another ship, and an "another ship rear passage range" where the ship passes through the rear of another ship, based on the first and second formulas described above.

The passage determinator 13 may determine that, on the estimated course of another ship expressed by the second formula, a side closer to the current position of another ship (the initial position [$x_0$, $y_0$]) than matched points P1 and P2 (that is, intersections P1 and P2 between the circle of the first formula and the straight line of the second formula) at which the estimated position of the ship is in agreement with the estimated position of another ship, when the first period of time to is equal to the second period of time $t_T$ ($t_O$=$t_T$), is a range where the ship passes through either one of the front and the rear of another ship, and a side far away from the current position of another ship than the matched point is a range where the ship passes through the other of the front and the rear of another ship.

In detail, the passage determinator 13 may determine that the side closer to the current position of another ship than the first matched point P1 from the current position of another ship is the "another ship rear passage range," and the side far away from the current position of another ship than the matched point P1 is the "another ship front passage range."

Further, the passage determinator 13 may determine that the side closer to the current position of another ship than the second matched point P2 from the current position of another ship is the "another ship front passage range," and the side far away from the current position of another ship than the matched point P2 is the "another ship rear passage range."

Further, the passage determinator 13 may determine that a given range including the matched points P1 and P2 is a risk area where there is a risk of the ship and another ship colliding to each other. The risk area may be the OZT (Obstacle Zone by Target), for example. Alternatively, the risk area may be a PAD (Predict Area of Danger) etc.

The calculation of the OZT may be made under an assumption that the ship travels while maintaining the velocity after the ship changed the course at the current position into an arbitrary direction, and another ship travels while maintaining the velocity from the current position, and a risk value indicative of the risk of the ship and another ship colliding each other may be calculated. Since this assumption is common to the first and second formulas described above, the calculation of the OZT can be communalized in part with the calculation of the front/rear passage range described above.

As will be described below, the passage determinator 13 may determine the "another ship front passage range" and the "another ship rear passage range" based on the solution of simultaneous inequalities including the first formula and the second formula under a condition where the second period of time $t_T$ is larger than the first period of time to, or a condition where the second period of time $t_T$ is smaller than the first period of time to.

By using real numbers a, b, and c (a<b<c) which can be set arbitrarily, the relationship between the first period of time to and the second period of time $t_T$ may be rewritten as a third formula and a fourth formula as follows. Here, although b is preferred to be 0, it may be a value near 0.

$$b \leq t_O - t_T < c \quad (b < c) \quad \ldots \text{(Third formula)}$$

$$a < t_O - t_T < b \quad (a < b) \quad \ldots \text{(Fourth formula)}$$

The "another ship rear passage range" may be determined based on the solutions of the first formula, the second formula, and the simultaneous inequalities of the third formula described above.

As solving the first formula and the second formula in terms of $t_T$, the following formula (A) can be obtained.

$$\left(v_{Tx}^2 + v_{Ty}^2\right)t_T^2 + 2\left(x_0 v_{Tx} + y_0 v_{Ty}\right)t_T + x_0^2 + y_0^2 = (v_0 t_O)^2 \quad \ldots \text{(A)}$$

From the formula (A) and the third formula, the following formulas (B) and (C) can be obtained.

$$\left(v_{Tx}^2 + v_{Ty}^2 - v_0^2\right)t_T^2 + 2\left(x_0 v_{Tx} + y_0 v_{Ty} - bv_0^2\right)t_T + x_0^2 + y_0^2 - b^2 v_0^2 \geq 0 \quad \ldots \text{(B)}$$

$$\left(v_{Tx}^2 + v_{Ty}^2 - v_0^2\right)t_T^2 + 2\left(x_0 v_{Tx} + y_0 v_{Ty} - cv_0^2\right)t_T + x_0^2 + y_0^2 - c^2 v_0^2 < 0 \quad \ldots \text{(C)}$$

A range obtained by multiplying the common part of the formula (B), the formula (C), and $t_T{\geq}0$ by $|\vec{v_T}|$ may become the "another ship rear passage range" where the ship passes through the rear of another ship. The condition $t_T{\geq}0$ is to exclude the past.

On the other hand, the "another ship front passage range" may be determined based on the solutions of the first formula, the second formula, and the simultaneous inequalities of the fourth formula described above.

Solving the first formula and the second formula in terms of $t_T$, the formula (A) described above can be obtained.

From the formula (A) and the fourth formula, the following formulas (G) and (H) may be obtained.

$$\left(v_{Tx}^2 + v_{Ty}^2 - v_0^2\right)t_T^2 + 2\left(x_0 v_{Tx} + y_0 v_{Ty} - av_0^2\right)t_T + x_0^2 + y_0^2 - a^2 v_0^2 \geq 0 \quad \ldots \text{(G)}$$

$$\left(v_{Tx}^2 + v_{Ty}^2 - v_0^2\right)t_T^2 + 2\left(x_0 v_{Tx} + y_0 v_{Ty} - bv_0^2\right)t_T + x_0^2 + y_0^2 - b^2 v_0^2 < 0 \quad \ldots \text{(H)}$$

A range obtained by multiplying the common part of the formula (G), the formula (H), and $t_T{\geq}0$ by $|\vec{v_T}|$ may

become the "another ship front passage range" where the ship passes through the front of another ship. The condition $t_T \geq 0$ is to exclude the past.

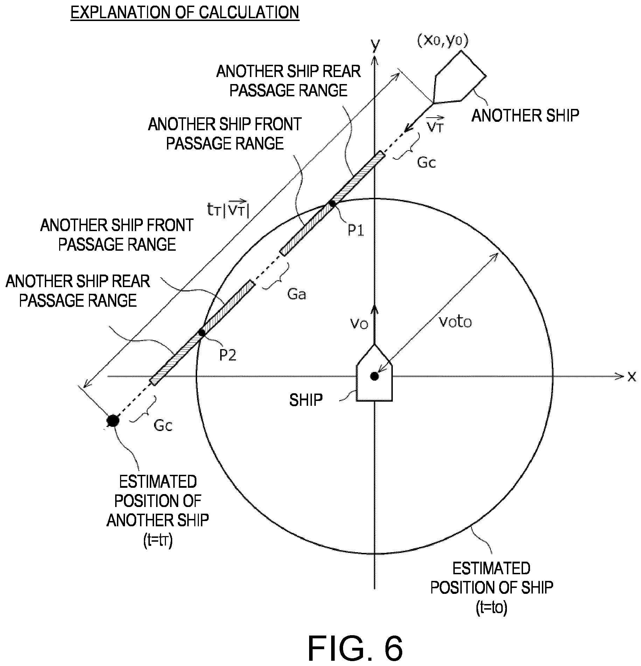

Fig. 6 is a view illustrating a calculation result of the another ship front passage range and the another ship rear passage range by the passage determinator 13. As illustrated in this drawing, the another ship front passage range may be formed inside the circle of the first formula which indicates the estimated position of the ship, and the another ship rear passage range may be formed outside the circle.

In detail, the another ship rear passage range may be formed on the side closer to the current position of another ship than the first matched point P1 from the current position of another ship, and the another ship front passage range may be formed on the side far away from the current position of another ship than the matched point P 1.

Further, the another ship front passage range may be formed on the side closer to the current position of another ship than the second matched point P2 from the current position of another ship, and the another ship rear passage range may be formed on the side far away from the current position of another ship than the matched point P2.

Here, by setting "c" as the upper limit in the third formula described above, a range Gc where another ship arrives more than Icl earlier than the ship (that is, a range where the arrival time difference is sufficiently large) may be excluded from the another ship rear passage range. Note that, if "c" is set as ∞ (infinity), the entire range outside the circle of the first formula may become the another ship rear passage range among the estimated course of another ship.

Further, in the fourth formula described above, by setting "a" as the lower limit, a range Ga where the ship arrives more than |a| earlier than another ship (that is, a range where the arrival time difference is sufficiently large) may be excluded from the another ship front passage range. Note that, if "a" is set as -∞ (negative infinity), the entire range outside the circle of the first formula may become the another ship front passage range among the estimated course of another ship.

According to the calculation technique of this embodiment, since it is not necessary to perform the calculation at every determination point like the calculation of the OZT, it is possible to make the theoretical resolutions of the "another ship front passage range" and the "another ship rear passage range" into infinitesimals, and it is possible to suppress the calculation complexity.

The display controller 14 may generate an image for indication based on the "another ship front passage range" and the "another ship rear passage range" which are determined by the passage determinator 13, and output it to the display unit 2.

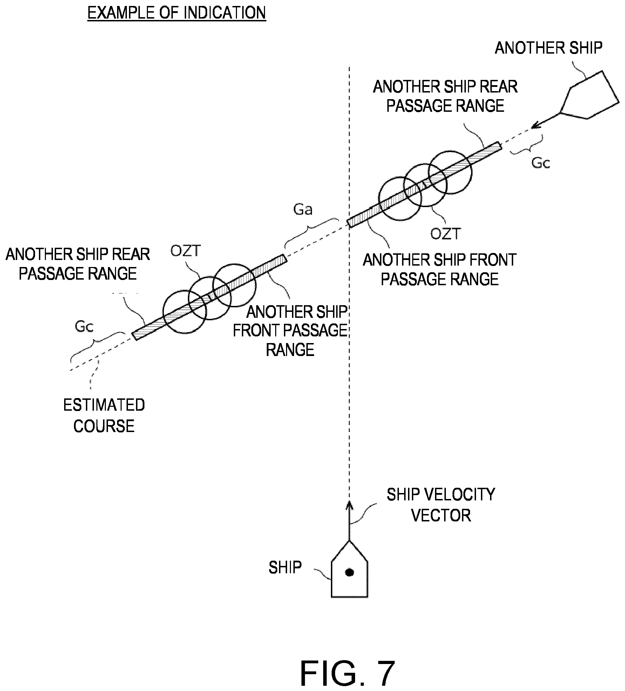

Fig. 7 is a view illustrating one example of the image for indication displayed on the display unit 2. In the image for indication, the OZT indicating that the risk value of the ship and another ship colliding each other is more than a threshold may be displayed on the estimated course of another ship. Further, on the estimated course of another ship, the "another ship front passage range" where the ship passes through the front of another ship, and the "another ship rear passage range" where the ship passes through the rear of another ship may be displayed. The estimated course of another ship may be indicated, for example, by an auxiliary line, such as a broken line.

The another ship front passage range and the another ship rear passage range may be displayed discriminatively by being different in display modes, such as color or texture, so as to be discriminable at a glance. Further, the "another ship front passage range" and the "another ship rear passage range" may be added with text for easier discrimination.

The another ship front passage range and the another ship rear passage range may have a given width, and may be formed in a strip shape extending along the estimated course of another ship. The width of the another ship front passage range and the another ship rear passage range may be narrower than the width of OZT.

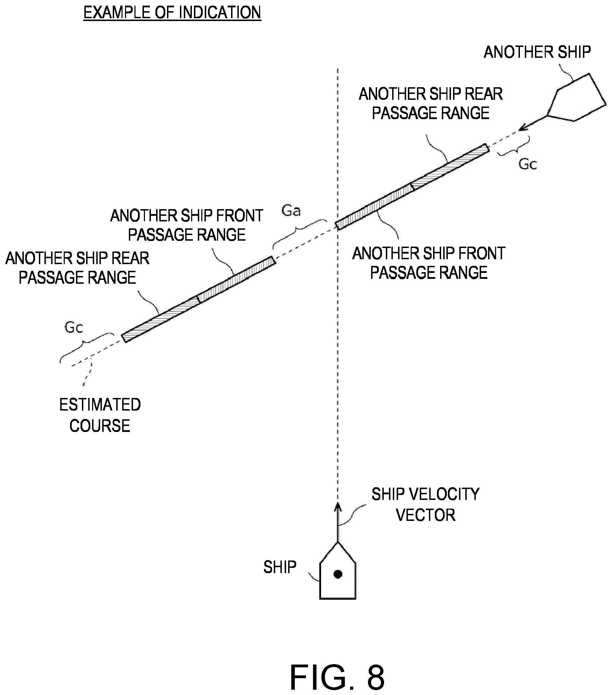

At least one of the another ship front passage range and the another ship rear passage range may be displayed superimposed on the OZT. For example, the another ship front passage range and the another ship rear passage range may be disposed over the OZT, or may be disposed under the OZT formed translucently. Note that, as illustrated in Fig. 8, the OZT may not be displayed.

According to the embodiment described above, since the "another ship front passage range" and the "another ship rear passage range" are displayed, it becomes easier to grasp at a glance whether the ship passes through the front or the rear of another ship.

Although one embodiment of the present disclosure is described above, it is needless to say that the present disclosure is not limited to the embodiment described above, and various modifications are possible for the person skilled in the art.

DESCRIPTION OF REFERENCE CHARACTERS

1 Information Processor, 2 Display Unit, 3 Radar, 4 AIS, 5 GNSS Receiver, 6 Gyrocompass, 7 ECDIS, 8 Alarm, 11 First Estimator, 12 Second Estimator, 13 Passage Determinator, 14 Display Controller, 100 Ship Monitoring System

**Claims**

1. A ship monitoring system, comprising:

   a first estimator configured to estimate an estimated position of a first ship after a first period of time in each direction, based on first ship data indicative of a position and a velocity of the first ship, by using a first formula, when assuming that the first ship travels after the first ship changed the course at the current position into an arbitrary direction;
   a second estimator configured to estimate an estimated course of a second ship and an estimated position of the second ship after a second period of time, that is included in the estimated course of the second ship, based on second ship data indicative of a position and a velocity of the second ship, by using a second formula; and
   a passage determinator configured to determine that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

2. The ship monitoring system of claim 1, wherein the passage determinator determines that a side closer to the current position of the second ship than a first matched point from the current position of the second ship is a range where the first ship passes through the rear of the second ship, and a side far away from the current position of the second ship than the matched point is a range where the first ship passes through the front of the second ship.

3. The ship monitoring system of claim 1 or 2, wherein the passage determinator determines that a side closer to the current position of a second ship than the second matched point from the current position of the second ship is a range where the first ship passes through the front of the second ship, and a side far away from the current position of the second ship than the matched point is a range where the first ship passes through the rear of the second ship.

4. The ship monitoring system of claims 1 to 3, wherein the passage determinator determines that a given range including the matched point is a risk area where there is a risk of the first ship and the second ship colliding each other.

5. The ship monitoring system of claims 1 to 4, wherein the passage determinator determines the range where the first ship passes through the front of the second ship, and the range where the first ship passes through the rear of the second ship, based on a solution of simultaneous inequalities including the first formula and the second formula under a condition that the second period of time is larger than the first period of time, or a condition that the second period of time is smaller than the first period of time.

6. The ship monitoring system of claims 1 to 5, wherein the first formula is expressed as follows, when the first period of time is to, a speed of the first ship is vo, a position of the first ship in an xy plane is (x, y), and an initial position of the first ship is the origin of the xy plane:

$$x^2 + y^2 = (v_0 t_0)^2 \ldots \text{(First formula)}.$$

7. The ship monitoring system of claims 1 to 6, wherein the second formula is expressed as follows, when the second period of time is $t_T$, an x-component of a velocity of the second ship is $v_{Tx}$, a y-component of the velocity of the second ship is $v_{Ty}$, a position of the second ship in an xy plane is (x, y), and an initial position of the second ship is $(x_0, y_0)$:

$$x = x_0 + v_{Tx} t_T$$

$$y = y_0 + v_{Ty} t_T \ldots \text{(Second formula)}.$$

8. The ship monitoring system of claims 1 to 7, further comprising a display unit configured to display a range where the first ship passes through the front of the second ship and a range where the first ship passes through the rear of the second ship on the estimated course of the second ship.

9. A ship monitoring system, comprising:

a first data generator configured to generate first ship data indicative of a position and a velocity of a first ship;

a second data generator configured to generate second ship data indicative of a position and a velocity of a second ship;

a first estimator configured to create a first formula indicative of an estimated position of the first ship after a first period of time in each direction, based on the first ship data, when assuming that the first ship travels after the first ship changed the course at the current position into an arbitrary direction;

a second estimator configured to create a second formula indicative of an estimated position of the second ship after a second period of time, based on the second ship data; and

a passage determinator configured to determine, based on a solution of simultaneous inequalities including the first formula and the second formula under a condition that the second period of time is larger than the first period of time or a condition that the second period of time is smaller than the first period of time, a range where the first ship passes through the front of the second ship and a range where the first ship passes through the rear of the second ship, among an estimated course of the second ship indicated by the second formula.

10. A ship monitoring method, comprising the steps of:

estimating an estimated position of a first ship after a first period of time in each direction, based on first ship data indicative of a position and a velocity of the first ship, by using a first formula, when assuming that the first ship travels after the first ship changed the course at the current position into an arbitrary direction;

estimating an estimated course of a second ship and an estimated position of the second ship after a second period of time, that is included in the estimated course of the second ship, based on second ship data indicative of a position and a velocity of the second ship, by using a second formula; and

determining that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

11. An information processor, comprising:

a first estimator configured to estimate an estimated position of a first ship after a first period of time in each direction, based on first ship data indicative of a position and a velocity of the first ship, by using a first formula, when assuming that the first ship travels after the first ship changed the course at the current position into an arbitrary direction;

a second estimator configured to estimate an estimated course of a second ship and an estimated position of the second ship after a second period of time, that is included in the estimated course of the second ship, based on second ship data indicative of a position and a velocity of the second ship, by using a second formula; and

a passage determinator configured to determine that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

12. A program configured to cause a computer to execute processing, the processing comprising:

estimating an estimated position of a first ship after a first period of time in each direction, based on first ship data indicative of a position and a velocity of the first ship, by using a first formula, when assuming that the first ship travels after the first ship changed the course at the current position into an arbitrary direction;

estimating an estimated course of a second ship and an estimated position of the second ship after a second period of time, that is included in the estimated course of the second ship, based on second ship data indicative of a position and a velocity of the second ship, by using a second formula; and

determining that, among the estimated course of the second ship, a side closer to the current position of the second ship than a matched point at which the estimated position of the first ship matches with the estimated position of the second ship, when the first period of time is equal to the second period of time, is a range where the first ship passes through either one of the front and the rear of the second ship, and a side far away from the current position of the second ship than the matched point is a range where the first ship passes through the other of the front and the rear of the second ship.

FIG. 1

OTHER-SHIPS MANAGEMENT DATABASE

| OTHER-SHIPS IDENTIFIER | POSITION | VELOCITY | | ... |
|---|---|---|---|---|
| | | SPEED | DIRECTION | |
| 001 | x1,y1 | v1 | d1 | ... |
| 002 | x2,y2 | v2 | d2 | ... |
| 003 | x3,y3 | v3 | d3 | ... |

FIG. 2

EXAMPLE OF INDICATION (CONVENTIONAL)

FIG. 3

FIG. 4

EXPLANATION OF CALCULATION

FIG. 5

EXPLANATION OF CALCULATION

FIG. 6

EXAMPLE OF INDICATION

FIG. 7

EXAMPLE OF INDICATION

**FIG. 8**

## INTERNATIONAL SEARCH REPORT

| International application No. |
| --- |
| **PCT/JP2022/007554** |

**A. CLASSIFICATION OF SUBJECT MATTER**

*G08G 3/02*(2006.01)i; *B63B 79/40*(2020.01)i
FI:   G08G3/02 A; B63B79/40

According to International Patent Classification (IPC) or to both national classification and IPC

**B. FIELDS SEARCHED**

Minimum documentation searched (classification system followed by classification symbols)

G08G1/00-99/00; B63B1/00-85/00; B63C1/00-15/00; B63G1/00-13/02; B63H1/00-25/52; B63J1/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | US 2012/0265380 A1 (CALIFORNIA INSTITUTE OF TECHNOLOGY) 18 October 2012 (2012-10-18)<br>    paragraphs [0109]-[0111], fig. 3-6, 11 | 1-12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 April 2022** | **10 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/007554**

| Patent document cited in search report | Publication date (day/month/year) | Patent family member(s) | Publication date (day/month/year) |
|---|---|---|---|
| US 2012/0265380 A1 | 18 October 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IMAZU, HAYAMA ; FUKUTO, JUNJI ; NUMANO, MASAYOSHI.** Obstacle Zone by Targets and Its Expression. *The Journal of Japan Institute of Navigation,* 2002, vol. 107, 191-197